# EUROPEAN PATENT APPLICATION

(11) **EP 1 312 415 A1**
(43) Date of publication of application: **21.05.2003**
(21) Application number: 01870246.4
(22) Date of filing: 16.11.2001
(51) Int. Cl.: B03B 9/04, C22B 7/04

(54) **Method for recovering stainless steel from stainless steel slags**

(71) Applicant: Trading and Recycling Company Sint Truiden, 3800 Sint-Truiden (BE)
(72) Inventor: Celis, Serge, B-3890 Gingelom (BE); Vanschoonbeek, Dany, B-3800 Sint-Truiden (BE)
(74) Representative: Van Reet, Joseph

(57) **Abstract**

In the method for recovering stainless steel from stainless steel slags the stainless steel slags are comminuted into particles, and a portion the comminuted stainless steel slags, having a predetermined particle size of x to y mm, x being smaller than y, and water are introduced into a wet jigging apparatus wherein a slurry of the comminuted stainless steel slags and the water is subjected to vibrations to achieve a segregation of higher and lower density materials settling on each other. The thus formed bottom fraction, which has a higher density and which shows a higher stainless steel concentration, is separated from the top fraction to recover the stainless steel contained in the bottom fraction. In this way, a substantial amount of the stainless steel present in the slags can be recovered and this in a sufficiently pure form to be reusable in the production of new stainless steel.

## Description

The present invention relates to a method for recovering stainless steel from stainless steel slags containing besides slag material stainless steel fragments embedded in the slag material, in which method the stainless steel slags are comminuted into particles, and a portion of said stainless steel fragments, which are at least partially released from the slag material, are removed from the comminuted stainless steel slags.

Just like the conventional, non-stainless steel slags, the slags derived from the production of stainless steel comprise mainly calcium oxide (CaO) and silicon dioxide (SiO₂). For the production of stainless steel, use is moreover additionally made of chromium. For martensitic stainless steel types, the chromium content comprises for example about 13 %, for stainless steel types of the ferritic type about 17.5% and for austenitic stainless steel types about 17.5-18 %. Austenitic stainless steel types comprise moreover additionally about 8 to 12 % of nickel.

A method for recovering stainless steel from stainless steel slags is disclosed in EP-A-0 837 043. This European patent application discloses more particularly to pick the stainless steel slags manually out of the crushed steel slags or to use magnetic separation systems for removing stainless steel fragments from the crushed stainless steel slags. It also discloses to use Foucault or Eddy current systems because a part of the stainless steel fragments is not or not sufficiently magnetic.

A drawback of this known method is that it enables to recover only a limited part of the stainless steel present in stainless steel slags in a sufficiently pure form. A test has for example been done wherein a 0/10 mm stainless steel slag fraction, containing 3.9 % of stainless steel, was separated magnetically into a magnetic and a non-magnetic fraction. Analyses have shown that the magnetic fraction contained only 42 % of the total amount of stainless steel and contained moreover 89 % impurities, i.e. actual slag material. Moreover, it appeared not to be possible to recover an additional amount of stainless steel by subjecting the "non-magnetic" fraction to a Foucault current separation system. A further test has shown moreover that by using a 0/5 mm fraction of the stainless steel slags (by crushing the 0/10 mm stainless steel slag fraction further and by sieving off the 0/5 mm fraction) and by using a stronger magnetic field, a magnetic fraction could be removed containing 88 % of the total amount of stainless steel. In addition to the stainless steel, the magnetic fraction contained however 91 % impurities.

An object of the present invention is therefore to propose a new method which enables to recover a large part of the stainless steel contained in stainless steel slags and this in a sufficiently pure form.

To this end, the method according to the present invention is characterised in that at least a portion of the comminuted stainless steel slags, having a predetermined particle size of x to y mm, x being smaller than y, and water are introduced into a wet jigging apparatus wherein a slurry of the comminuted stainless steel slags and the water is subjected to vibrations to achieve a segregation of higher and lower density materials settling on each other and forming a bottom fraction and a top fraction, the bottom fraction, which has a higher density than the top fraction and which shows a higher stainless steel concentration, being separated from the top fraction to recover the stainless steel contained in the bottom fraction.

According to the invention, it has been found that the use of a wet jigging apparatus enables to carry out a wet gravitational concentration so as to achieve a high density (= high specific weight) fraction (= a fraction composed of a material having a high specific weight) which contains a considerable part of the stainless steel and this in a sufficiently high concentration. By means of the wet jigging apparatus, it has in particular appeared to be possible to recover more than 50 %, more particularly more than 60 %, of the stainless steel present in the comminuted stainless steel slags and this in a high density fraction containing less than 50 %, more particularly less than 40 % impurities.

In a preferred embodiment of the method according to the invention, the maximum size y of the particles of the stainless steel slag portion treated in the wet jigging apparatus is smaller than or equal to 16 mm, preferably smaller than or equal to 11 mm and most preferably smaller than or equal to 6 mm but larger than or equal to 2 mm, preferably larger than or equal to 3 mm and most preferably larger than or equal to 4 mm, the maximum particle size y being preferably substantially equal to 5 mm.

It has been found that when the stainless steel slags are comminuted into such small particle sizes, in particular into a particle size smaller than 6 mm, the metal fragments are better released from the slag material.

Other advantages and particularities of the invention will become apparent from the following description of some particular embodiments of the process according to the invention. This description is only given by way of example and is not intended to limit the scope of the invention.

So, the invention generally relates to a method for recovering stainless steel from slags which are produced in the production of stainless steel.

The production of stainless steel is usually done in three steps in each of which slags are produced. These are for example electric furnace slags, converters slags and VOD-final slags (VOD = Vacuum Oxidising Decarburation), in amounts of for example respectively about 8 % by weight, 14 % by weight and 3 % by weight, about 5 % by weight of rubble being further typically discarded. In each of these cases, the slag is composed on the basis of burned lime (CaO). This lime forms a molten protective layer onto the bath and thus protects the hot steel against oxidation. The lime moreover absorbs oxides and impurities so that a mixture of CaO and metal oxides (of transition metals) is produced. In the last phase, the non-refractory oxides are reduced with metallic Si, so that mainly a mixture of 2CaO.SiO₂ with small amounts of inert oxides and a little sulphur and/or phosphorus is produced. In order to make the reduction reaction to go on smoothly, fluor spar (CaF₂) is added which makes the slag liquid. A typical analysis of the produced slags is as follows :

| | |
|---|---|
| CaO | 40-60 % |
| SiO₂ | 20-30 % |
| MgO | ±10% |
| Fe₂O₃ | ± 2 % |
| MnO | ± 1 % |
| S | traces |
| F⁻ | some % |
| Cr₂O₃ | 1 to 10 % |
| NiO | <1 % |

From analyses it appeared that the slags produced during the different steps have a similar composition.

The electric furnace slag, which is produced on the electric melting furnace for stainless steel, comprises more particularly mainly CaO, MgO and SiO₂. In addition, it contains elements which are produced by oxidation of the elements which are present in the scrap iron, namely FeO, Cr₂O₃, NiO and Al₂O₃. Further, small amounts of impurities may also be present such as ZnO, PbO, TiO₂ and CuO.

The converter slag is formed during the refining of the stainless steel melt by blowing in oxygen, the carbon content being reduced by means of this oxygen from at the most 2.5 % to about 0.3 %. In principle, it has the same composition as the electric furnace slag. Due to the better reduction, the content of non-ferro alloy elements is however substantially lower.

The VOD-final slag is obtained by refining (oxygen blowing) under vacuum resulting in a further reduction of the carbon content, more particularly to about 0.05 %. Due to the even better reduction as converter slag, this slag quasi does not contain any non-ferro-elements anymore. The total Cr content in the electric furnace slag has been observed to be significantly higher than this in the VOD and the converter slag.

In addition to the actual slag material, i.e. to the above described oxides, the slags also contain stainless steel fragments of different sizes.

In practice, the mixed stainless steel slags are comminuted, more particularly crushed, by means of pincers and hydraulic breaking hammers on machines or cranes into bits and pieces having sizes which may vary from 0 up to 2000 mm at the most. The released metal pieces or fragments which are present in the thus comminuted steel slags are removed manually. The recycled metallic material, which is sufficiently pure, is taken up back into the production.

The roughly broken steel slags, from which the largest metal pieces have preferably already been removed, are further comminuted to a particle size of for example 0 to 20 or 32 mm which can be done in one or more steps, in other words crushing processes. It will be clear that after the applied crushing processes, most of the particles may meet the required particle size but that there will always remain an amount of larger particles which may however be sieved off and possible be comminuted again. The entire mass of stainless steel slags does not have to be comminuted as such but it is possible to remove larger fragments in advance therefrom, in particular by sieving.

For crushing the rough steel slag pieces, use can be made of various breaker types such as percussion breakers, hammer breakers, conical and rotary crushers and jaw crushers, preference being clearly given, at least in a first phase, to a jaw crusher provided with an antiblocking system in view of the high efficiency which can be reached therewith and since this crusher is the most resistant against the hard material. This jaw crusher is applied in practice to comminute the steel slags to fragments of up to for example 300 mm at the most. This does not alter the fact that - except for the problems of possible hammer breaking - a percussion or hammer breaker achieves a same efficiency and produces even qualitatively more and better suited product, in other words a better grain formation (cube), and enables even to achieve directly a particle size of for example from 0 to 20 or 32 mm. Possibly, the excess above for example 20 or 32 mm will be further comminuted after sieving until the entire mass has been reduced to a particle size below these values.

In practice a further crusher (= breaker or mill) is however used after the jaw crusher for comminuting the stainless steel slags to a particle size of for example from 0 to 20 or 32 mm. The same breaker types can be used as described herebefore but in this case preference is clearly given to the use of a percussion breaker. By means of a percussion breaker the metal fragments (about 1 to 20 % of the comminuted steel slags) which are still present are better freed by the percussion a.o. from the actual slag material (lime stone) and by means of this type of breaker a better cubicity of the particles can be assured which assures more efficient application possibilities as described in EP-A-0 837 043.

After having comminuted the steel slags to the above described sizes, they can be separated in practice by one or more sieving operations into different fractions, in addition to which it is for example possible to crush the largest fraction or "oversize" again. Such a sieving operation can therefore already be applied before the desired particle size is achieved.

After having comminuted the steel slags, still further metal fragments are removed, in other words recycled therefrom, in practice and used again as raw material a.o. for the production of new stainless steel. In practice, this in done manually, by hand picking and magnetically by magnetic separation systems.

According to the invention it has now been found that a larger part of the metal fragments can be recovered from the comminuted stainless steel slags in a sufficiently pure form for being used as raw material in the production of new stainless steel.

In accordance to the invention use is made of a wet jigging apparatus or a so-called jig for carrying out a separation based on the difference in density (specific weight) of the metal fragments and the actual slag material. Since jigs are already well known in practice and are used more particularly for processing ores and coal, a detailed description of such a jig will not be given in the present specification. Basically, a jig comprises a reservoir wherein a mixture of high- and low-density materials and water is introduced and wherein the thus formed slurry is subjected to vibrations ("jigged") using a pulsation mechanism. The effect of this wet "jigging" treatment is a division or segregation of the high- and low-density materials settling on each other. At the bottom of the reservoir, the jig may be provided with a fine meshed screen, showing for example openings of 0.4 mm, so that the finest particles migrate through this screen and are subsequently removed. It is also possible to provide an upward flow of water through the slurry in order to wash out floating particles which may be present. In practice, there are both continuous and discontinuous jigging apparatus, the discontinuous jigging apparatus (working batch wise) being usually used for doing tests or small scale productions whilst for large scale treatments preference is given to a continuous apparatus.

In the method according to the invention, the bottom fraction, which has a higher density and which shows a higher stainless steel concentration, is separated from the top portion in order to recover the stainless steel contained in the bottom fraction. It is clear that when a larger portion of the stainless steel slags treated in the jig is removed as bottom portion, more of the stainless steel will be recovered but the concentration of steel in this bottom portion will be lower. If the efficiency (or separation capacity) of the wet jigging apparatus is sufficiently high, the separation into the high and the low density fraction can be performed in one jig enabling the recover the desired amount of steel and this with the desired small amounts of impurities. According to the invention it has been found that a good separation can be achieved when operating the jig at a frequency greater than 1 Hz, and preferably greater than 2 Hz, but smaller than 15 Hz, and preferably smaller than 7 Hz.

In order to recover more stainless steel, the low density top fraction can be divided into a first or top fraction and a second or bottom fraction showing a higher density. The removed second fraction can be treated again in the jigging apparatus, in particular together with a further portion of stainless steel slags. When it is a continuous jigging apparatus, the second fraction can be recycled to this apparatus. The second fraction can in particular be selected in such a manner that the stainless steel concentration thereof is in the same order of magnitude than the stainless steel concentration in the slags introduced in the jigging apparatus or it can also be selected to have a higher concentration.

Another way of recovering more stainless steel, which can be applied either or not in combination with the previous possibility, consists in that the portion of stainless steel slags which is treated in the jigging apparatus has already previously been treated in this or in another wet jigging apparatus. In this way, a larger high density fraction can be removed after the first treatment, which contains most of the stainless steel fragments but also a considerable amount of impurities. During the subsequent "jigging" treatment these impurities can further be removed to achieve a more concentrated heavy fraction.

The portion of the comminuted stainless steel slags which is treated in the wet jigging apparatus has a predetermined particle size of x to y mm, x being smaller than y. In a preferred embodiment y is smaller than or equal to 16 mm, preferably smaller than or equal to 11 mm and most preferably smaller than or equal to 6 mm but larger than or equal to 2 mm, preferably larger than or equal to 3 mm and most preferably larger than or equal to 4 mm. In a practical example y is equal to 5 mm. After having crushed the stainless steel slags as described hereinabove to the particle sizes which are usual in practice, i.e. for example to a particle size of 0/20 or 0/32 mm, the "finer" fraction which is treated in this preferred embodiment in the jig can be achieved by sieving this fraction out of the crushed stainless steel slags (from which the larger metal fractions have preferably already been removed by a magnetic separation system). If also the stainless steel contained in the larger fractions should be recovered, they can be comminuted to a smaller particle size, for example by means of a roll mill, and the required fraction can be sieved off whilst the coarser fraction can optionally be milled again. According to the invention it has been found that by comminuting the stainless steel slags to a smaller particle size, more stainless steel can be recovered by means of a wet "jigging" process.

In order to improve the efficiency of the jigging apparatus, the difference between x and y is preferably smaller than or equal to 10 mm, more preferably smaller than or equal to 8 mm and most preferably smaller than or equal to 5 mm. Since a jig is also less effective for very small particles, x is furthermore preferably larger than or equal to 0.5 mm and most preferably larger or equal to 0.8 mm. In a most preferred embodiment, x is equal to 1 or 2 mm whilst y is preferably equal to 5 or 6 mm.

When sieving of the stainless steel slag portion or fraction which is preferably treated in the jig, a fine fraction of 0/x mm, wherein x is larger than 0 mm but in particular smaller than or equal to 2 mm and preferably smaller or equal to 1 mm, remain. In accordance to the present invention, it has been found that this fine fraction can be treated on a concentrating percussion table, in particular on a concentrating percussion table equipped with a sand deck, to separate a heavy fraction, containing the recovered stainless steel, from a light fraction.

In order to further reduce the amount of impurities in the heavy fraction achieved as bottom fraction in the wet jigging apparatus, this heavy fraction can further be subjected to a milling operation, in particular in a ball mill, to release further slag material which still adheres to the stainless steel fragments. The released slag material can then be removed, for example by means of a sieve, so that the purity of the steel fragments is further improved.

### Example

In this example some laboratory tests will be described performed with a small scale discontinuous wet jigging apparatus, more particularly a Harz type fixed-sieve jig. It will however be clear that in practice larger scale devices, in particular continuous devices can be used. An example of a continuous jig is the Denver type jig with lateral piston, the Siebtechnik type jig with mobile hutch and the Alljig® type pneumatic jig.

A 0/32 mm fraction of stainless steel slags was crushed further to a particle size of 0/10 mm by passing it twice through a jawbreaker with a dry sieve (10 mm mesh size), any particles were removed by the sieving operation. By means of the same jawbreaker, the 0/10 mm fraction was further communited (by three passes through the breaker) to a 0/5 mm fraction, the remaining portion larger than 5 mm being again removed. As described already hereabove, in practice use is preferably made of a roll mill instead of a jawbreaker to produce the desired "fine" fraction.

By means of a dry sieve 100 parts by weight of the 0/5 fraction were further divided into 32.2 parts by weight of a 0/1 fraction and 67.8 parts by weight of a 2/5 fraction. Analyses have shown that the 0/5 fraction contained 0.37, the 1/5 fraction 0.42 and the 0/1 fraction 0.28 weight % of Ni. Since the slag originated from the production of stainless steel having a Ni content of 8%, the stainless steel concentration can easily be calculated by multiplying the Ni content by 100/8. A further indication of the metal content of the slags is also given in the following tables by determining the amount of the fraction which is not milled when preparing the samples for the chemical analyses because the metal fraction can be considered to be "not millable". As explained hereafter, the 0/5 fraction was further separated by means of a batch jigging process whilst the 0/1 fraction was separated by "tabling", more particularly on a concentrating percussion table equipped with a sand deck.

### Wet jigging of the 1/5 mm fraction.

This separation was carried out in a Harz type fixed-sieve jig ("bac à piston de type Harz") having a diameter of 15 cm and a height of 22 cm. At the end of the test, the column of graded material was cut into horizontal slices which are recuperated separately. The particles passing through the screen of 0.4 mm situated at the bottom of the separation chamber are collected in a hutch which can be emptied at the bottom of the apparatus. The slices are numbered from 0 to N from the bottom of the chamber (the slice with the highest density) towards the top thereof (the slice with the lowest density).

Since the stainless steel slags contained only a small amount of high density elements, first two portions of stainless steel slags (0/5 mm) were treated successively in the wet jigging apparatus and the lower slices obtained for each portion were added to one another. The resulting amount of stainless steel slags, having an increased stainless steel content, was treated again in the jig. The operating conditions of these tests are given in Table 1 and the results are given in Table 2.

**Table 1:**

| Operating conditions for the jigging tests. | | |
|---|---|---|
| Test | Pretreatment | Finishing |
| Mass of the sample (kg) | 8.7 | 3.5 |
| Amplitude of the pulsation (mm) | 15 | 15 |
| Frequency of the pulsation (puls./min) | 175 | 150 |
| Duration of the test (min) | 15 | 15 |

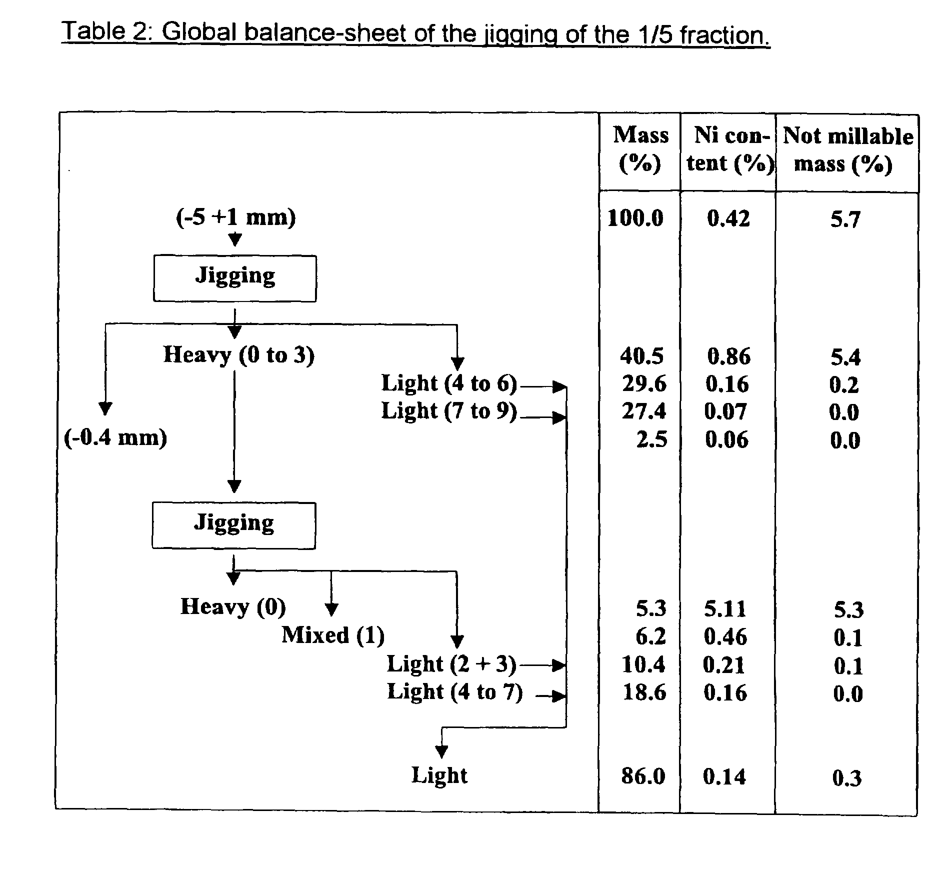

By treating the dense fractions of the pretreated stainless steel portions again a concentrate is obtained having a small mass (5.3%) but containing a high stainless steel concentration (63.8% = 5.11*100/8) corresponding to 64% of the total amount of stainless steel in the 1/5 fraction supplied to the jig. The mixed fraction, which shows a stainless steel concentration of about 5.7% (=0.46*100/8) can be treated again in the jig together with a further portion of stainless steel slags.

In order to further increase the stainless steel concentration in the concentrate achieved by the jigging operation, the high density concentrate was further treated for one hour to a wet milling process in an Alpine type ball mill (jar containing 7 kg of steel balls) and was subsequently sieved again through a 300 µm sieve. The results of this test are illustrated in Table 3.

**Table 3:**

| Influence of a milling operation on the heavy concentrate. | | |
|---|---|---|
| Properties of the heavy concentrate | Before milling | After milling |
| Mass (%) | 100.0 | 79.0 |
| Volume mass (g/cm³) | 5.50 | 6.14 |

This treatment causes a substantial increase of the average density of the product which has moreover a much more pronounced metallic appearance. It should be noted that the volume mass obtained after this milling operation approaches much closer the theoretical volume mass of stainless steel, which is about 7.7 g/cm³.

### "Tabling" of the 0/1 mm fraction

This test has been carried out on a concentrating percussion table of the Denver 13 A type equipped with a deck of 40 x 18", more particularly a concentrating percussion table equipped with a sand deck enabling to recuperate directly a concentrate starting from a material containing fine dense particles. It should be noted that the "Light A" or mixed fractions correspond to the products recuperated in the corner of the table (at the side of the concentrate) whereas the "Light B" fractions come from that part of the table where the real rest fractions are generally recuperated (opposite the feed).

In a first step, a pretreatment has been carried out in view of maximising the recuperation of metal particles in the form of a pre-concentrate (maximum yield). In a subsequent finishing step, this pre-concentrate was treated again in order to obtain a concentrate which shows a maximum metal content (maximum selectivity). The balance-sheet of these tests is given in Table 4.

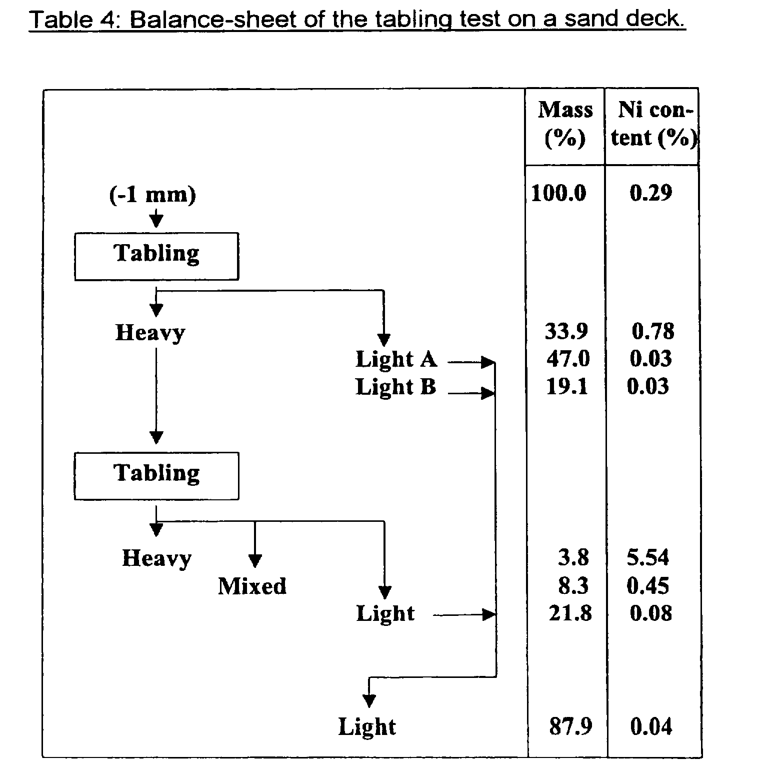

The final concentrate contains about 69% stainless steel (=5.54*100/8) and contains about 74% of the stainless steel present in the original 0/1 fraction. Its average volume mass comprises 5.34 g/cm³.

The above tests have shown that by jigging the 1/5 fraction and by tabling the 0/1 fraction a concentrate showing a high stainless steel concentration can be achieved, containing about 66 of the stainless steel present in the 0/5 fraction and this in an amount of less than 5% of the initial amount. A summary of the treatment of the 0/5 fraction is given in Table 5.

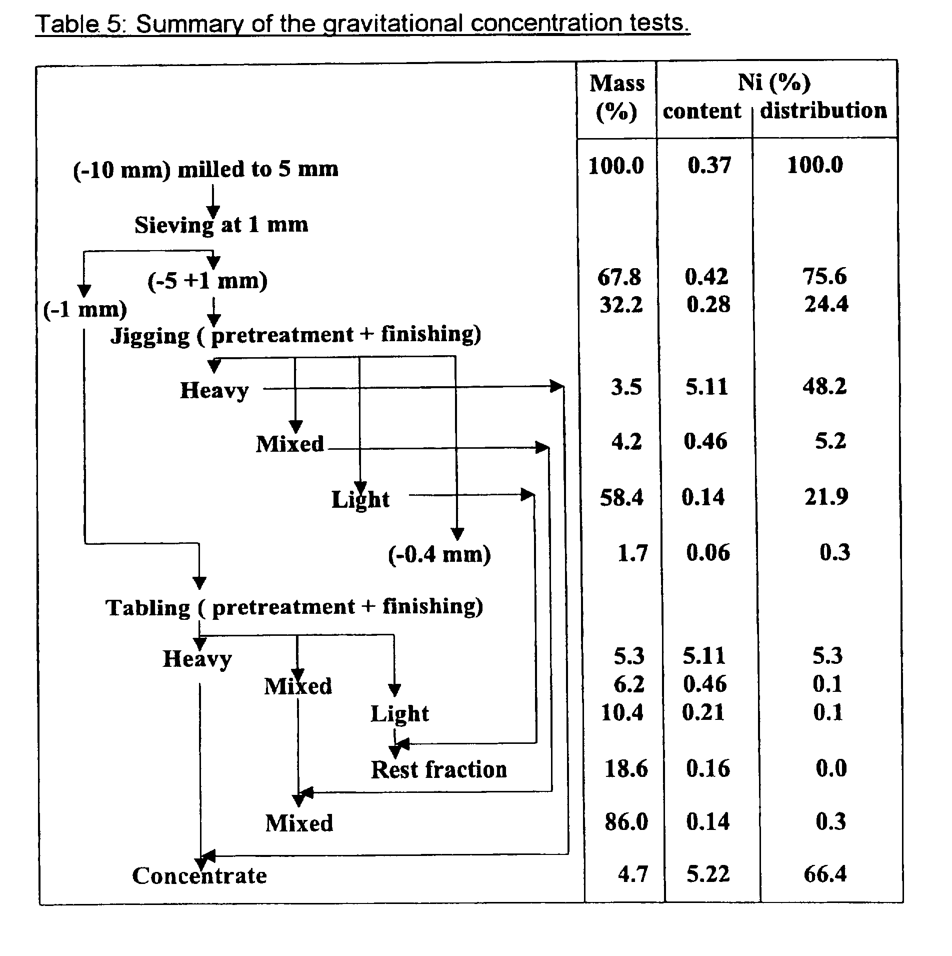

## Claims

1. A method for recovering stainless steel from stainless steel slags containing besides slag material stainless steel fragments embedded in the slag material, in which method the stainless steel slags are comminuted into particles, and a portion of said stainless steel fragments, which are at least partially released from the slag material, are removed from the comminuted stainless steel slags, **characterised in that** at least a portion of the comminuted stainless steel slags, having a predetermined particle size of x to y mm, x being smaller than y, and water are introduced into a wet jigging apparatus wherein a slurry of the comminuted stainless steel slags and the water is subjected to vibrations to achieve a segregation of higher and lower density materials settling on each other and forming a bottom fraction and a top fraction, the bottom fraction, which has a higher density than the top fraction and which shows a higher stainless steel concentration, being separated from the top fraction to recover the stainless steel contained in the bottom fraction.

2. A method according to claim 1, **characterised in that** the top fraction is formed in the jigging apparatus by a first fraction and a second fraction, the second fraction, having a higher density than the first fraction and showing a higher stainless steel concentration, being treated again in the jigging apparatus, in particular treated in the presence of a further portion of the comminuted steel slags.

3. A method according to claim 1 or 2, **characterised in that** y is smaller than or equal to 16 mm, preferably smaller than or equal to 11 mm and most preferably smaller than or equal to 6 mm but larger than or equal to 2 mm, preferably larger than or equal to 3 mm and most preferably larger than or equal to 4 mm, y being preferably substantially equal to 5 mm.

4. A method according to any one of the claims 1 to 3, **characterised in that** the difference between x and y is smaller than or equal to 10 mm, preferably smaller than or equal to 8 mm and most preferably smaller than or equal to 5 mm.

5. A method according to any one of the claims 1 to 4, **characterised in that** x is larger than or equal to 0.5 mm and preferably larger or equal to 0.8 mm, x being preferably substantially equal to 1 mm.

6. A method according to any one of the claims 1 to 5, **characterised in that** the high density fraction is further subjected to a milling operation, in particular in a ball mill, to release slag material which still adheres to the stainless steel fragments, the released slag material being at least partially removed, in particular by means of a sieve.

7. A method according to any one of the claims 1 to 6, **characterised in that** said portion of the stainless steel slags which is introduced in the wet jigging apparatus comprises a high density fraction obtained by separating a larger portion of the stainless steel slags, which shows said predetermined particle size range, in a wet jigging apparatus, which may be the same jigging apparatus as the one used for treating said portion of the stainless steel slags or a different jigging apparatus, into said high density fraction and a lower density fraction.

8. A method according to any one of the claims 1 to 7, **characterised in that** prior to introducing said portion of the comminuted stainless steel slags into the jigging apparatus, stainless steel fragments are removed therefrom by means of magnets.

9. A method according to any one of the claims 1 to 8, **characterised in that** x is larger than 0 mm and preferably smaller than or equal to 2 mm and most preferably smaller than or equal to 1 mm, and a further portion of the comminuted stainless steel slags, having a predetermined particle size of 0 to x mm and achieved in particular when sieving off said first portion of the stainless steel slags which is treated in the jigging apparatus, is treated on a concentrating percussion table, in particular on a concentrating percussion table equipped with a sand deck, to separate this further portion into at least two fractions having a different density, a first fraction, having the highest density and showing the highest stainless steel concentration being separated from the second fraction to recover the stainless steel contained in the first fraction.

10. A method according to any one of the claims 1 to 9, **characterised in that** the slurry of the comminuted stainless steel slags and the water is subjected in the wet jigging apparatus to vibrations showing a frequency greater than 1 Hz, and preferably greater than 2 Hz, but smaller than 15 Hz, and preferably smaller than 7 Hz.
